## Europäisches Patentamt
## European Patent Office
## Office européen des brevets

(19)

(11) Veröffentlichungsnummer : **0 177 966**
**B1**

(12) **EUROPÄISCHE PATENTSCHRIFT**

(45) Veröffentlichungstag der Patentschrift :
28.06.89

(51) Int. Cl.⁴ : **H 04 B 7/195**

(21) Anmeldenummer : 85112909.8

(22) Anmeldetag : 11.10.85

(54) Fernmeldesatellitensystem.

(30) Priorität : 11.10.84 DE 3437317

(43) Veröffentlichungstag der Anmeldung :
16.04.86 Patentblatt 86/16

(45) Bekanntmachung des Hinweises auf die Patenterteilung : 28.06.89 Patentblatt 89/26

(84) Benannte Vertragsstaaten :
AT BE CH DE FR GB IT LI NL SE

(56) Entgegenhaltungen :
EP--A-- 0 059 454
GB--A-- 1 117 011
US--A-- 3 940 736
US--A-- 4 054 949
ICC'81, PROCEEDINGS OF THE INTERNATIONAL
CONFERENCE ON COMMUNICATIONS, Band 3/4,
14.-18. Juni 1981, Denver, Colorado, US, Seiten 54.3.1-
54.3.4, IEEE, New York, US; J.M. RUDDY: "A novel
non-geostationary satellite communications system"
R.B. MARSTEN: "Communication satellite systems
technology", Band 19, 1966, Seiten 887-908, AIAA
Progress in Astronautics and Aeronautics Academic
Press, New York, US; G.E. NEUNER: "Lunar communication satellites"
ELECTRONIC DESIGN, Band 27, Nr. 8, 12. April 1979,
Seiten 118-121, Rochelle Park, US; B. WARNER:
"Fast LSI memories cram more information into
satellite-communications bands"

(73) Patentinhaber : Siemens Aktiengesellschaft Berlin
und München
Wittelsbacherplatz 2
D-8000 München 2 (DE)

ANT Nachrichtentechnik GmbH
Gerberstrasse 33
D-7150 Backnang (DE)

Messerschmitt-Bölkow-Blohm Gesellschaft mit beschränkter Haftung
Robert-Koch-Strasse
D-8012 Ottobrunn (DE)

(72) Erfinder : Dondl, Peter, Dipl.-Ing.
An der Fuchsenhütte 48
D-6101 Rossdorf 1 (DE)

(74) Vertreter : Mehl, Ernst, Dipl.-Ing. et al
Postfach 22 13 17
D-8000 München 22 (DE)

Jouve, 18, rue St-Denis, 75001 Paris, France

**Beschreibung**

Die Erfindung betrifft ein Fernmeldesatellitensystem mit mehreren Erdsatelliten, die in zyklischer Folge am nahezu gleichen Himmelspunkt erscheinen und die sich im Funkbetrieb mit wenigstens einer sendenden und wenigstens einer empfangenden Erdefunkstelle durch Umschaltung der Übertragung von einem auf den folgenden Satelliten abwechseln.

Ein solches Fernmeldesatellitensystem ist z. B. durch die EP-A-0 059 454 bekannt.

Bei Funkübertragungsverfahren über Satelliten kommt es darauf an, daß die Fernmeldeübertragung von Nutzsignalen kontinuierlich und unterbrechungsfrei von statten geht. Vor allem bei der Übertragung von Digitalsignalen ist außerdem die gleichbleibende Übertragungsgeschwindigkeit an den terrestrischen Enden der Satellitenstrecke wegen des genauen Zeittaktes wichtig.

Bei geostationären Satellitensystemen ändert sich in der Geometrie der Funkstrecken kaum etwas, und deshalb kann ein solches System funk- und übertragungstechnisch auf konventionelle Weise betrieben werden. In Satellitenfunksystemen, in denen die Satelliten sich nur einen Teil ihrer Umlaufzeit im Sichtbereich ihrer Erdfunkstellen aufhalten und in einem bestimmten Zeit- und Himmelspunkt von anderen Satelliten gleicher Fernmeldefunktion abgelöst werden (Wadsworth, D. v. Z.: Longitude reuseplan doubles communication satellite capacity of geostationary arc; 8. IAJAA Conference, Orlando Florida 1980, Dondl, P.: Loopus erschließt dem Satellitenfunk eine neue Dimension, NTZ-Archiv 5 (1983) Heft 12, S. 327-335), gibt die Umschaltung der Fernmeldefunktion vom einen zum anderen Satelliten Probleme auf, beispielsweise die Gefahr, daß sich auf der Abwärtsstrecke zeitliche Überlappungen zwischen den Aussendungen der beiden sich ablösenden Satelliten ereignen, die es zu vermeiden gilt. Diese Probleme haben ihre Ursache in der Tatsache, daß nicht beide Satelliten, die sich gegenseitig ablösen in exakt dem gleichen geometrischen Punkt sein können und ferner gewisse Bahntoleranzen und Toleranzen für den Zeitpunkt der Umschaltung akzeptiert werden müssen.

Der Erfindung liegt die Aufgabe zugrunde, eine kontinuierliche Nutzsignalübertragung auch über sich ablösende Satelliten zwischen der terrestrischen Schnittstellen von Erdfunkstellen zu gewährleisten.

Diese Aufgabe wird erfindungsgemäß dadurch gelöst, daß die sendende Erdefunkstelle eine Schalteinrichtung enthält, durch die die Aussendung des digitalen Nutzsignals für eine gegenüber der Gesamtübertragungszeit vergleichsweise kurze Zeit unterbrochen wird, daß die Schalteinrichtung zusammen mit der Umschaltung der Übertragung von einem auf den folgenden Satelliten aktiviert wird, daß die sendende Erdefunkstelle wenigstens einen Sendepufferspeicher und die empfangende Erdefunkstelle wenigstens einen Empfangspufferspeicher enthalten, daß der Sendepufferspeicher zwischen Schalteinrichtung und der Quelle für das digitale Nutzsignal angeordnet ist und daß die Übertragung des digitalen Nutzsignals über den Satelliten mit einer gegenüber der ursprünglichen Übertragungsgeschwindigkeit geringfügig erhöhten Geschwindigkeit erfolgt. Weitere Ausgestaltungen der Erfindung sind in den Unteransprüchen angegeben.

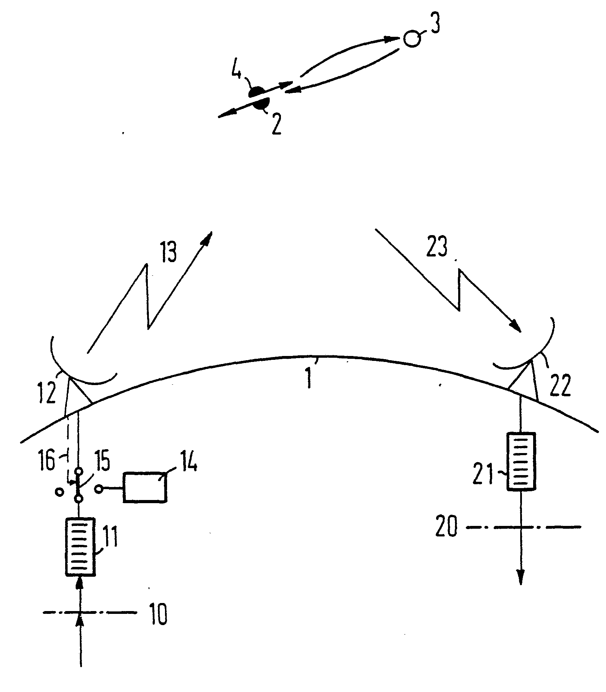

Ein Ausführungsbeispiel der Erfindung ist anhand von Fig. 1 erläutert. Gezeigt ist die Erdkrümmung 1 mit einer sendenden Erdfunkstelle 12 und einer empfangenden Erdfunkstelle 22. Darüber ist der relevante Teil der Satellitenflugbahn symbolisch mit drei Satellitenpositionen skizziert, wobei es sich bei 2 um den abzulösenden, bei 4 um den ablösenden und bei 3 um einen am Umkehrpunkt angelangten Satelliten handelt. Die Pfeile symbolisieren die Funkfelder aufwärts 13 und abwärts 23. Unter den Erdefunkstellen sind die Sende- 11 und Empfangspufferspeicher 21, sowie die Schnittstellen 10 und 20 zum terrestrischen Fernmeldenetz dargestellt. Dabei ist in die Verbindung zwischen Sendepufferspeicher 11 und sendender Erdefunkstelle 12 ein Umschalter 15 eingefügt, der anstelle des Sendepufferspeichers 11 den Ausgang eines Pseudozufallsgenerators 14 mit der Erdefunkstelle verbinden kann. Die Steuerung des Umschalters 15 erfolgt über eine Steuerleitung 16 von der sendenden Erdefunkstelle aus.

In Fig. 1 wird in einem kurzen Zeitfenster, in das der Umschaltezeitpunkt zwischen den beiden sich ablösenden Satelliten fällt, die Nutzsignalübertragung unterbrochen, indem entweder die sendende Erdefunkstelle ein Füllsignal beispielsweise eines spezifierten Bitmusters sendet oder eine Sendepause einlegt. Während dieser Unterbrechung der Nutzsignalübertragung werden im Pufferspeicher 11 der sendenden Erdefunkstelle 12 die über die Schnittstelle 10 angelieferten Nutzsignale zwischengespeichert. Außerdem wird über die Steuerleitung 16 von der sendenden Erdefunkstelle 12 der Umschalter 15 wahlweise entweder auf den Leerkontakt oder auf den Kontakt umgeschaltet, an den der Ausgang des Pseudozufallsgenerators 14 angeschlossen ist. Im letzteren Fall wird während der Umschaltung der sendenden Erdefunkstelle 12 vom Satelliten 2 auf den Satelliten 4 der sendenden Erdefunkstelle 12 ein Pseudozufallssignal zugeführt. Wenn das Zeitfenster im Signal in der empfangenden Erdefunkstelle 22 ankommt, werden die Signale, die noch über den vorausfliegenden Satelliten 2 kurz vor dem Umschaltezeitpunkt übertragen wurden, vom Empfangspufferspeicher 21 ausgespeichert, um über die Schnittstelle 20 unterbrechungsfrei die Nutzsignalübertragung aufrecht zu erhalten. Am Ende des Zeitfensters wird die Nutzsignalübertragung über den ablösenden Satelliten 4 wieder aufgenommen. Diese Nutzsignalübertragung läuft dann dauernd oder durchschnittlich bis zum nächsten Umschaltezeitfenster geringfügig schneller ab, als über die beiden terrestrischen Schnittstellen 10 und 20. Bei diesem Vorgang wird der Sendepufferspeicher 11 langsam entladen und der Empfangspufferspeicher 21 geladen, um für das nächste Zeitfenster zur Satellitenumschaltung vorbereitet zu sein.

Dieses Prinzip läßt sich nicht nur bei kontinuierlicher Signalübertragung anwenden, sondern auch bei zeitgestaffeltem Vielfachzugriff (TDMA = time division multiple access). Allerdings kommt hier ein weiteres Problem hinzu, nämlich die Positionsunsicherheit des Satelliten zu Übertragungsbeginn. Hier kann es passieren, daß sich die Sendestöße (TDMA-Bursts) von mehreren zugreifenden sendenden Erdefunkstellen wegen einer geringen Bahnabweichung gegenseitig über die geringe Schutzzeit zwischen den Sendestößen hinweg überlappen. Um auch dies zu verhindern, werden die Schutzzeiten zwischen den Sendestößen vergrößert. Diese Maßnahme dauert mindestens, bis jede sendende Erdefunkstelle von der (TDMA-) Referenzstation, die auch an Bord des jeweiligen Satelliten sein kann, über die zeitliche Abweichung und die nötige Korrektur ihres Sendestoßes im (TDMA-) Zugriffszeitrahmen informiert ist. Sende- und Empfangspufferspeicher 11 und 21 stellen auch die zur Überbrückung der vergrößerten Schutzzeiten erforderliche zusätzliche Speicherkapazität zur Verfügung.

Die Vergrößerung der Schutzzeiten zwischen den Sendestößen kann entweder durch Streckung des Zugriffszeitrahmens oder durch Verkürzung der Sendestöße erreicht werden. Eine Kombination beider Verfahren ist ebenfalls möglich.

Um bei Satelliten auf Bahnen, deren Ort zu Satellitenumschaltung innerhalb der aktiven Bahnphase den beteiligten Erdefunkstellen am nächsten liegt, die Signallaufzeitverzögerung so gering wie möglich zu halten, kann die empfangsseitige Nutzsignalspeicherung, die die Satellitenbewegung ausgleicht, zur Überbrückung des Umschaltezeitfensters und der verlängerten Schutzzeiten zwischen den Sendestößen herangezogen werden.

Dies geschieht im einzelnen in folgenden Etappen :

In der ersten Etappe werden die Schutzzeiten zwischen den Sendestößen der verschiedenen Erdefunkstellen gemäß den vorstehend beschriebenen Möglichkeiten erweitert. Dadurch wird der Sendepufferspeicher 11 der beteiligten Erdefunkstellen noch mehr geladen, da durch die größeren Schutzzeiten die Nutzsignale mit geringerer Übertragungsgeschwindigkeit zum Satelliten abgesetzt werden, als über die terrestrische Schnittstelle 10. Dieser Vorgang dauert mindestens die Laufzeit zur Referenzstation und zurück. Der Empfangspufferspeicher wird noch weiter entleert, um den Nutzsignalfluß über die terrestrische Schnittstelle 20 aufrecht zu erhalten.

In der zweiten Etappe, die bis zu dem Zeitpunkt dauert, in dem der jeweilige Satellit seinen fernsten Punkt erreicht hat, ist die Nutzsignalübertragungsgeschwindigkeit über das Funkfeld 13 so erhöht, daß die im Sendepufferspeicher 11 geladenen Nutzsignale plus der weiterhin über die terrestrische Schnittstelle 10 angelieferten Nutzsignale bis zum Ende dieser zweiten Etappe übertragen werden, und zu diesem Zeitpunkt die nach der Erfindung bewirkten Ladungen im Sendepufferspeicher 11 Null betragen.

In der dritten Etappe, die bis zum Beginn des Umschaltezeitfensters dauert, sind die Nutzsignalübertragungsgeschwindigkeiten über die terrestrischen Schnittstellen 10 und 20 und im Aufwärtsfunkfeld 13 zum Satelliten gleich oder etwa gleich, wobei die Annäherung des Satelliten in dieser Phase seines Fluges bewirkt, daß die Nutzsignalübertragungsgeschwindigkeit im Abwärtsfunkfeld 23 vom Satelliten her größer ist als im Aufwärtsfunkfeld 13 zum Satelliten, und sich dadurch der Empfangspufferspeicher 21 jeder beteiligten Erdefunkstelle so weit lädt, daß er für die Überbrückung des Umschaltezeitfensters und der vergrößerten Schutzzeiten vorbereitet ist.

Zusätzlich zu dem bisher Beschriebenen läßt sich der Umschaltezeitpunkt zwischen den Satelliten so wählen, daß der einzuschaltende Satellit 4 mit Sicherheit ferner ist als der auszuschaltende Satellit 2 ; dann kann die sich hierdurch ergebende Zusatzlaufzeit den Sendepufferspeicher ganz oder teilweise ersetzen.

Ist der radiale Abstand der beiden Satelliten 2, 4 zur Umschaltezeit groß genug und die Umschaltung zeitlich bezogen auf das an den Satelliten ankommende Signal entsprechend gestaffelt, so tritt eine Signalwiederholung durch den eingeschalteten Satelliten 4 ein, die zur Synchronisierung in der Empfangserdefunkstelle verwendet werden kann.

Der Vorteil der Erfindung liegt darin, daß auch Systeme mit nichtstationären Satelliten, die jedoch auf definierten Bahnen fliegen, in das vorhandene Fernmeldenetz integriert werden können.

**Patentansprüche**

1. Fernmeldesatellitensystem mit mehreren Erdsatelliten (2, 3, 4), die in zyklischer Folge am nahezu gleichen Himmelspunkt erscheinen und die sich im Funkbetrieb mit wenigstens einer sendenden (12) und wenigstens einer empfangenden Erdefunkstelle (22) durch Umschaltung der Übertragung von einem auf den folgenden Satelliten abwechseln, dadurch gekennzeichnet, daß die sendende Erdefunkstelle (12) eine Schalteinrichtung (15) enthält, durch die die Aussendung des digitalen Nutzsignals für eine gegenüber der Gesamtübertragungszeit vergleichsweise kurze Zeit unterbrochen wird, daß diese Schalteinrichtung zusammen mit der Umschaltung der Übertragung von einem auf den folgenden Satelliten aktiviert wird, daß die sendende Erdefunkstelle (12) wenigstens einen Sendepufferspeicher (11) und die empfangende Erdefunkstelle (22) wenigstens einen Empfangspufferspeicher (21) enthalten, daß der Sendepufferspeicher (11) zwischen Schalteinrichtung und der Quelle für das digitale Nutzsignal angeordnet ist und daß die Übertragung des digitalen Nutzsignals über den Satelliten mit einer gegenüber der ursprünglichen Übertragungsgeschwindigkeit geringfügig erhöhten Geschwindigkeit erfolgt.

2. Fernmeldesatellitensystem nach Anspruch 1, dadurch gekennzeichnet, daß in beiden Erdefunkstellen jeweils sowohl ein Sende- als auch ein Empfangspufferspeicher angeordnet sind.

3. Fernmeldesatellitensystem nach Ansprüchen 1 oder 2, dadurch gekennzeichnet, daß beim Sendepufferspeicher der Lesetakt eine gegenüber dem Einschreibetakt geringfügig höhere Taktfrequenz aufweist, während beim Empfangspufferspeicher der Einschreibetakt eine geringfügig höhere Taktfrequenz als der Lesetakt aufweist.

4. Fernmeldesatellitensystem nach Anspruch 1, dadurch gekennzeichnet, daß die Schalteinrichtung als Umschalter ausgebildet ist, die im normalen Betrieb für das digitale Nutzsignal durchlässig ist und während der Umschaltung von einem auf den folgenden Satelliten an einen Generator für ein definiertes Füllsignal, insbesondere ein spezifiziertes Bitmuster, angeschaltet ist.

5. Fernmeldesatellitensystem nach Anspruch 1 mit zeitgestaffeltem Vielfachzugriff (TDMA), dadurch gekennzeichnet, daß unmittelbar nach der Umschaltung der Übertragung auf den folgenden Satelliten zwischen den einzelnen Sendestößen (Bursts) vergrößerte Schutzzeiten eingehalten werden, bis jede beteiligte sendende Erdefunkstelle von der TDMA-Referenzstation über die zeitliche Abweichung und die nötige Korrektur der zeitlichen Lage der Sendestöße der jeweiligen Sendeerdfunkstelle im Zugriffsrahmen informiert ist, daß Sende- und Empfangspufferspeicher während dieser Zeit durch Anschaltung jeweils eines weiteren Speichers eine zusätzliche Speicherkapazität aufweisen, um die kontinuierliche Nutzsignalübertragung zwischen den Erdefunkstellen über die terrestrischen Schnittstellen zu den weiteren Übertragungseinrichtungen aufrecht zu erhalten.

6. Fernmeldesatellitensystem nach Anspruch 5, dadurch gekennzeichnet, daß die Vergrößerung der Schutzzeiten durch Streckung des Zugriffszeitrahmens erreicht wird.

7. Fernmeldesatellitensystem nach Anspruch 5, dadurch gekennzeichnet, daß die Vergrößerung der Schutzzeiten durch Verkurzung der Sendestöße erreicht wird.

8. Fernmeldesatellitensystem nach Anspruch 1 oder 2, dadurch gekennzeichnet, daß der Umschaltzeitpunkt zwischen den Satelliten so gewählt wird, daß der einzuschaltende Satellit (4) mit Sicherheit ferner ist als der auszuschaltende (2) und die sich hierdurch ergebenden Zusatzlaufzeit, den Sendepufferspeicher zumindest teilweise ersetzt.

9. Fernmeldesatellitensystem nach Anspruch 7, dadurch gekennzeichnet, daß der radiale Abstand der beiden Satelliten (2, 4) zur Umschaltzeit groß ist, und daß die Umschaltung zeitlich bezogen auf das am Satelliten ankommende Signal so gestaffelt ist, daß eine Signalwiederholung durch den eingeschalteten Satelliten eintritt, die zur Synchronisierung in der Empfangserdfunkstelle (22) verwendet wird.

## Claims

1. Satellite communication system having a plurality of earth satellites (2, 3, 4), which appear in cyclic sequence at virtually the same point in the sky and which alternate during radio operation with at least one transmitting earth station (12) and at least one receiving earth station (22) by switching over transmission from one satellite to the next, characterized in that the transmitting earth station (12) includes a switching system (15) by which the emission of the digital useful signal is interrupted for a comparatively short time with respect to the overall transmission time, in that this switching system is activated together with the switching over of transmission from one satellite to the next, in that the transmitting earth station (12) includes at least one transmission buffer store (11) and the receiving earth station (22) includes at least one reception buffer store (21), in that the transmission buffer store (11) is arranged between switching system and the source for the digital useful signal and in that the transmission of the digital useful signal via the satellite takes place at a speed which is slightly increased with respect to the original transmission speed.

2. Satellite communication system according to Claim 1, characterized in that both a transmission buffer store and a reception buffer store are arranged in each case in both earth stations.

3. Satellite communication system according to Claim 1 or 2, characterized in that, in the case of the transmission buffer store, the read clock has a clock frequency which is slightly higher than the write clock, while in the case of the reception buffer store, the write clock has a slightly higher clock frequency than the read clock.

4. Satellite communication system according to Claim 1, characterized in that the switching system is designed as a change-over unit, which in normal operation allows the digital useful signal to pass and during switching over from one satellite to the next is connected to a generator for a defined filling signal, in particular a specified bit pattern.

5. Satellite communication system according to Claim 1 with time division multiple access (TDMA), characterized in that, directly after the switching over of transmission to the next satellite, increased protection times are maintained between the individual transmission bursts until each transmitting earth station involved is informed by the TDMA reference station of the time deviation and the necessary correction in the timing of the transmission bursts of the respective transmitting earth station in the access frame, and in that transmission and reception buffer stores have an additional storage capacity during this time due to interfacing of at least one further store in each case in order to maintain the continuous useful signal transmission between the earth stations via the terrestrial interfaces to the other transmission facilities.

6. Satellite communication system according to Claim 5, characterized in that the increase in the protection times is achieved by extension of the access time frame.

7. Satellite communication system according to Claim 5, characterized in that the increase in the protection time is achieved by shortening of the transmission bursts.

8. Satellite communication system according to Claim 1 or 2, characterized in that the switching instant between the satellites is chosen such that there is certainty that the satellite (4) to be activated is more remote than the satellite (2) to be deactivated and the resultant additional propagation time at least partially replaces the transmission buffer store.

9. Satellite communication system according to Claim 7, characterized in that the radial distance between the two satellites (2, 4) at the switching time is great, and in that the switching over is separated in time with respect to the signal arriving at the satellite such that a signal repetition by the activated satellite occurs, which is used for synchronization in the receiving earth station (22).

**Revendications**

1. Système de télécommunication par satellites comportant plusieurs satellites terrestres (2, 3, 4), qui apparaissent selon une séquence cyclique approximativement dans le même point du ciel et qui alternent dans le cadre de leur fonctionnement radioélectrique de transmission avec au moins une station radioélectrique terrestre émettrice (12) et au moins une station radioélectrique terrestre réceptrice (22), sous l'effet d'une commutation de la transmission d'un satellite au satellite suivant, caractérisé en ce que la station radioélectrique terrestre émettrice (12) comporte un dispositif de commutation (15), grâce auquel l'émission du signal utile numérique est interrompue pendant un intervalle de temps relativement bref par rapport à la durée totale de la transmission, que ce dispositif de commutation est activé conjointement avec la commutation de la transmission d'un satellite au satellite suivant, que la station radioélectrique terrestre émettrice (12) comporte au moins une mémoire tampon d'émission (11) et que la station radioélectrique terrestre réceptrice (22) comporte au moins une mémoire tampon de réception (21), que la mémoire tampon d'émission (11) est branchée entre un dispositif de commutation et la source délivrant le signal utile numérique, et que la transmission du signal utile numérique s'effectue par l'intermédiaire du satellite à une vitesse faiblement supérieure à la vitesse initiale de transmission.

2. Système de télécommunication par satellites suivant la revendication 1, caractérisé par le fait qu'aussi bien une mémoire tampon d'émission qu'une mémoire tampon de réception sont disposées dans les deux stations radioélectriques terrestres.

3. Système de télécommunication par satellites suivant les revendications 1 ou 2, caractérisé par le fait que dans la mémoire tampon d'émission, la cadence de lecture possède une fréquence légèrement supérieure à celle de la cadence d'enregistrement, tandis que dans la mémoire tampon de réception, la cadence d'enregistrement possède une fréquence légèrement supérieure à celle de la cadence de lecture.

4. Système de télécommunication par satellite suivant la revendication 1, caractérisé par le fait que le dispositif de commutation est réalisé sous la forme d'un commutateur qui est passant pour le signal numérique utile pendant le fonctionnement normal, et est raccordé, pendant la commutation d'un satellite au satellite suivant, à un générateur délivrant un signal de remplissage défini, notamment un profil binaire spécifié.

5. Système de télécommunication par satellites suivant la revendication 1, à accès multiple et échelonné (TDMA), caractérisé par le fait que des intervalles de temps accrus de protection sont respectés entre les différentes salves d'émission (Bursts), immédiatement après la commutation de la transmission sur le satellite suivant, jusqu'à ce que chaque station radioélectrique terrestre émettrice participante soit informée, par la station de référence (TDMA), de l'écart dans le temps et de la correction nécessaire de la position temporelle des salves d'émission de la station radioélectrique terrestre émettrice respective, dans la trame d'accès, que des mémoires tampons d'émission et de réception possèdent, pendant cet intervalle de temps une capacité de mémoire supplémentaire, par suite du raccordement d'une mémoire supplémentaire respective, afin de maintenir la transmission en continu du signal utile entre les stations radioélectriques terrestres, par l'intermédiaire des interfaces terrestres de liaison à d'autres dispositifs de transmission.

6. Système de télécommunication par satellites suivant la revendication 5, caractérisé par le fait que l'accroissement des intervalles de temps de protection est obtenu au moyen d'une dilatation de la trame temporelle d'accès.

7. Système de télécommunication par satellites suivant la revendication 5, caractérisé par le fait que l'accroissement des intervalles de temps de protection est obtenu au moyen d'une réduction des salves d'émission.

8. Système de télécommunication par satellites suivant la revendication 1 ou 2, caractérisé par le fait que l'instant de commutation entre les satellites est choisi de manière que le satellite (4), avec lequel le contact doit être réalisé, est, de façon sûre, plus éloigné que le satellite (2), avec lequel le contact doit être supprimé, et que le temps de propagation supplémentaire qui est obtenu de ce fait, remplace au moins partiellement la mémoire tampon d'émission.

9. Système de télécommunication par satellites suivant la revendication 7, caractérisé par le fait que la distance radiale entre les deux satellites (2, 4) est grande à l'instant de la commutation, et que la commutation est échelonnée dans le temps par rapport au signal arrivant dans le satellite, de telle sorte qu'il se produit une répétition du signal effectuée par le satellite, avec lequel le contact est établi, qui est utilisée pour la synchronisation dans la station radioélectrique terrestre réceptrice (22).